# EUROPEAN PATENT APPLICATION

(11) **EP 1 798 970 A1**
(43) Date of publication of application: **20.06.2007**
(21) Application number: 04773656.6
(22) Date of filing: 30.09.2004
(51) Int. Cl.: H04N 5/91, H04N 5/93

(54) **VIDEO DECODING APPARATUS, VIDEO PLAYBACK APPARATUS, VIDEO DECODING METHOD, AND VIDEO PLAYBACK METHOD**

(71) Applicant: Matsusita Electric Industrial Co., Ltd., Kadoma-shi, Osaka 571-8501 (JP)
(72) Inventor: URANO, Katsuki Matsushita Elec.Ind.Co ltd., Chuo-ku,Osaka-shi,Osaka 540-6319 (JP)
(74) Representative: Eisenführ, Speiser & Partner
(86) International application number: PCT/JP2004/014795
(87) International publication number: WO 2006/038295

(57) **Abstract**

When zoom playback is performed using a three-plane structure frame buffer in a video playback apparatus, decoding of a zoom target portion is sometimes not completed by a display start time, leading to deterioration in displayed video. In order to solve this problem, only a portion of a coded video data stream to be displayed by a zoom function is decoded without decoding the coded video data stream other than the portion to be displayed during zoom playback, whereby the decoding speed for one piece of data is reduced, resulting in zoom playback having no video distortion.

## Description

### TECHNICAL FIELD

The present invention relates to a video decoding technique and a video playback technique which are adopted when decoding and reproducing digital data of video that is encoded by MPEG or the like.

### BACKGROUND ART

There is a zoom playback function as one of functions of a video playback apparatus which decodes a coded video data stream of video that is subjected to compression processing according to MPEG1, MPEG2 or the like, and displays the video.

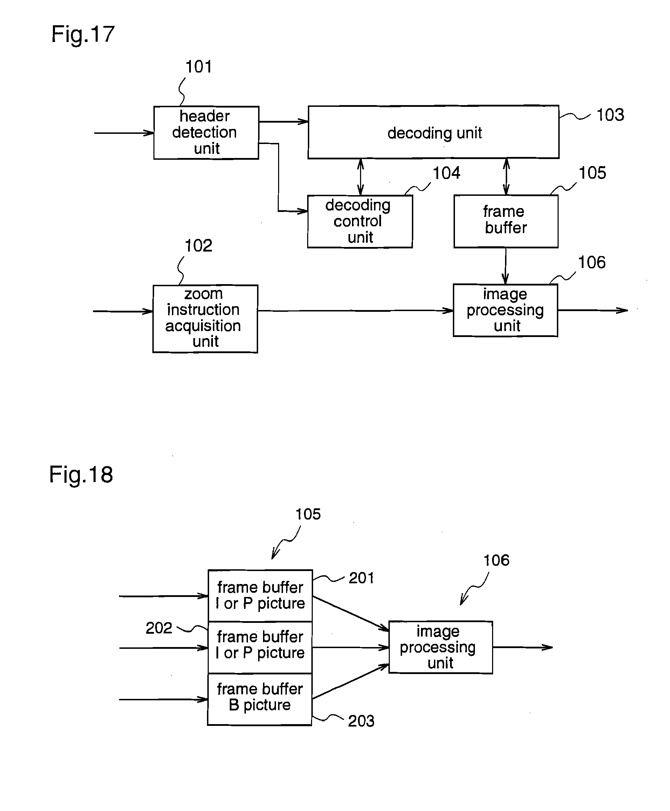

Figure 17 is a block diagram illustrating an example of a construction of a conventional video playback apparatus for reproducing video data based on the MPEG standard.

With reference to figure 17, the conventional video playback apparatus comprises a header detection unit 101, a zoom instruction acquisition unit 102, a decoding unit 103, a decoding control unit 104, a frame buffer 105, and an image processing unit 106, and the respective constituents perform processes as follows.

The header detection unit 101 detects header information of an inputted coded video data stream, and outputs the detected header information to the decoding unit 3 and the decoding control unit 4.

The zoom instruction acquisition unit 102 obtains a zoom instruction comprising arbitrary start positions x, y where zooming is desired, and an enlargement factor, and outputs the zoom instruction to the image processing unit 106.

The decoding unit 103 decodes the inputted coded video data stream, and stores the decoded video data stream into the frame buffer. The decoding unit 103 comprises a variable-length decoder (VLD), an inverse quantizer (IQ), an inverse discrete cosine transform (IDCT) unit, and a motion compensation (MC) unit.

The decoding control unit 104 controls the decoding process of the decoding unit 103 on the basis of the header information from the header detection unit 101.

The frame buffer 105 is a buffer area wherein the decoded video data stream obtained by the decoding unit 103 is stored.

The image processing unit 106 displays the decoded video data stream stored in the frame buffer 105. When the zoom instruction acquisition unit 102 obtains the zoom instruction, the image processing unit 106 performs zoom playback on the basis of the instruction.

Next, the operation of the conventional video playback apparatus will be described.

The coded video data stream is initially inputted to the header detection unit 101, and header information is detected. Then, the decoding control unit 104 controls the decoding unit 103 on the basis of the detected header information, whereby decoding is carried out. The decoded video data stream obtained by the decoding unit 103 is stored in the frame buffer 105.

Figure 18 is a diagram for explaining the structure of the frame buffer.

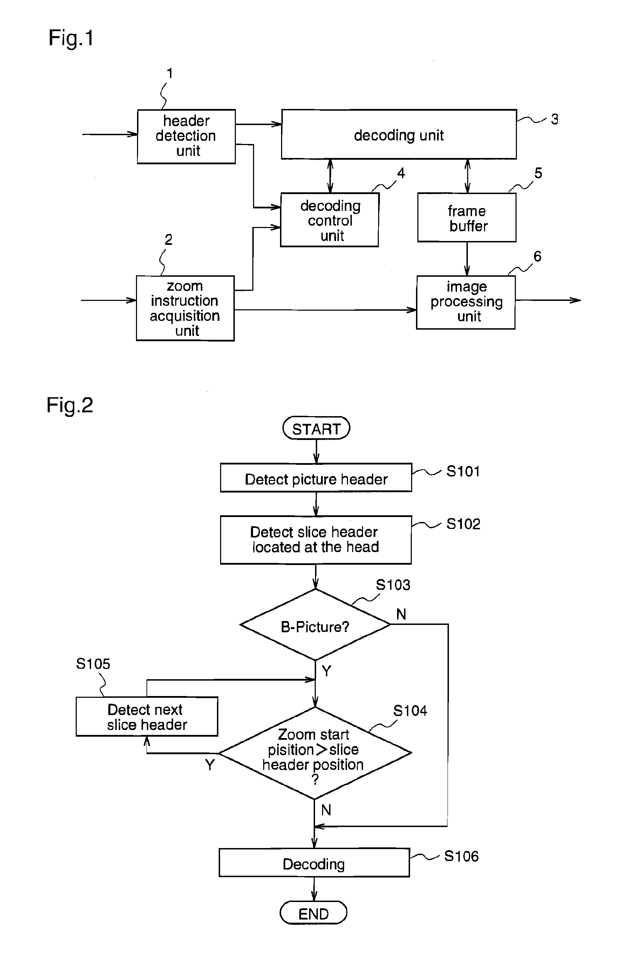

When decoding B pictures based on the MPEG standard, since the decoding of the B pictures is carried out by performing forward prediction and backward prediction, the frame buffer 105 requires, as picture memories, at least two frame buffers 201 and 202 for reference pictures and a display frame buffer 203 for buffering for picture display as shown in figure 2. When this frame buffer 105 is utilized, the decoded video data stream of the B pictures is stored in the same area of the frame buffer 203.

Thereafter, the decoded video data stream stored in the frame buffer 105 is inputted to the image processing unit 106 to be displayed as video.

Next, a description will be given of the operation during zoom playback by the conventional video playback apparatus.

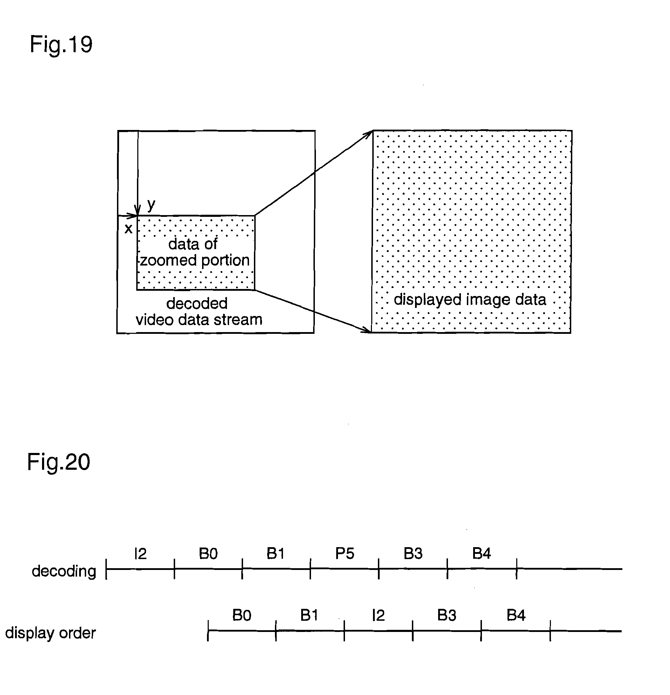

Figure 19 is a diagram for explaining a zoom playback processing.

The zoom playback processing is executed when the zoom instruction acquisition unit 102 obtains the zoom instruction that indicates arbitrary start positions x, y where zooming is desired, and an enlargement factor.

The zoom instruction obtained by the zoom instruction acquisition unit 102 is outputted to the image processing unit 106, and the image processing unit 102 obtains the decoded data in an area to be displayed from the frame buffer, thereby to perform zoom display of the video indicated by the zoom instruction.

Next, a description will be given of a decoding timing by the decoding unit 103 and a display timing by the image processing unit 106 in the conventional video playback apparatus.

Figure 20 is a diagram illustrating examples of a decoding timing of the decoding unit and a display timing of the image processing unit.

As shown in figure 20, in the case of processing B pictures, the time required until the image processing unit 106 obtains the decoded video data stream and displays the same is usually 0.5 field behind the time when the decoding unit 103 starts decoding. This 0.5 field corresponds to a delay time from when the decoding unit 103 starts decoding of each picture to when the image processing unit 106 starts acquisition of the decoded video data stream that is stored in the frame buffer 105.

When the video playback apparatus does not perform zoom playback processing, since the decoded video data stream that is obtained from the frame buffer 105 by the image processing unit 106 is a decoded video data stream having the x position = 0 and the y position = 0, the decoded video data stream required for display has already been stored in the frame buffer 105 at the timing when the image processing unit 106 performs display.

On the other hand, when the video playback apparatus performs zoom playback processing, the x position and the y position of the decoded video data stream that is obtained from the frame buffer 105 by the image processing unit 106 are not 0. This causes a problem that decoding of the coded video data stream from the x position and the y position, which is required by the image processing unit 106 to perform display, has not yet been completed by the time when the image processing unit 106 obtains the decoded video data stream and displays the same.

Further, in order to solve this problem, it is considered that a display frame buffer for buffering for image display may be added in the frame buffer 105. However, provision of a new memory area causes problems such as an increase in the device cost and an increase in the circuit scale.

Furthermore, it is difficult to perform display without distortion of video by seamlessly switching various kinds of playback modes, as well as solving the above-mentioned problems.

The present invention is made to solve the above-mentioned problems and has for its object to provide a video playback apparatus which can realize zoom playback with no distortion of video by using a three-plane frame buffer.

### DISCLOSURE OF THE INVENTION

According to the present invention (Claim 1), a video decoding apparatus comprises a zoom start position acquisition unit for obtaining a zoom start position; a slice header acquisition unit for obtaining a slice header of an inputted coded video data stream; a decoding unit for decoding the inputted coded video data stream to generate a decoded video data stream; and a decoding control unit for, during zoom playback, comparing a position that is indicated by each slice header that is obtained by the slice header acquisition unit with a zoom start position that is obtained by the zoom start position acquisition unit, and making the decoding unit perform a skip process of skipping a decoding start position of the coded video data stream to a position indicated by a slice header corresponding to the zoom start position.

According to the video decoding apparatus of the present invention (Claim 1), even during zoom playback, decoding of coded data required for performing video display can be completed within a period of time from start of decoding of the coded video data stream to start of display of the decoded video data stream. Thereby, zoom playback having no distortion of video can be realized using a frame buffer of three-plane structure.

According to the present invention (Claim 2), in the video decoding apparatus defined in Claim 1, the decoding control unit controls the decoding unit to perform the skip process only when the inputted coded video data stream is a B picture.

According to the video decoding apparatus of the present invention (Claim 2), when decoding data based on the MPEG standard, I pictures or P pictures to be used as reference picture data are not subjected to the skip process. Further, even during zoom playback, decoding of coded data required for performing video display can be completed within a period from start of decoding of the coded video data stream to start of display of the decoded video data stream is started, whereby zoom playback having no distortion of video can be realized using a frame buffer of three-plane structure.

According to the present invention (Claim 3), the video decoding apparatus defined in Claim 1 further includes a zoom start position calculation unit for, when the decoded video data stream is enlarged or reduced for display according to the vertical size of the coded video data stream, recalculating the zoom start position obtained from the zoom start position acquisition unit according to the enlargement scale or the reduction scale for display, and the decoding control unit determines the decoding start position by using the zoom start position that is recalculated by the zoom start position calculation unit.

According to the video decoding apparatus of the present invention (Claim 3), even when the decoded video data stream is enlarged or reduced according to the vertical size of the coded video data stream, the skip process can be carried out using the position indicated by each slice header obtained by the slice header acquisition unit and the zoom start position obtained by the zoom start position acquisition unit, whereby zoom playback having no distortion of video is realized using a frame buffer of three-plane structure.

According to the present invention (Claim 4), a video playback apparatus comprises a zoom start position acquisition unit for obtaining a zoom start position; a slice header acquisition unit for obtaining a slice header of an inputted coded video data stream; a decoding unit for decoding the inputted coded video data stream to generate a decoded video data stream; a frame buffer in which the decoded video data stream is temporarily stored; an image processing unit for displaying the decoded video data stream that is stored in the frame buffer; and a decoding control unit for, during zoom playback, comparing a position that is indicated by each slice header obtained by the slice header acquisition unit with the zoom start position that is obtained by the zoom start position acquisition unit, and controlling the decoding unit so as to perform a skip process of skipping a decoding start position of the coded video data stream to a position indicated by the slice header corresponding to the zoom start position, only when the inputted coded video data stream is a B picture; wherein, when a predetermined kind of instruction request is made during the zoom playback, the image processing unit judges whether a picture to be displayed at the timing when the instruction request is made is a B picture or not, and nullifies the instruction request when the picture is a B picture.

According to the video playback apparatus of the present invention (Claim 4), since the image processing unit does not execute the predetermined kind of instruction request for a B picture on which the skip process is performed, it is possible to prevent distortion of display video when switching the playback mode.

According to the present invention (Claim 5), in the video playback apparatus defined in Claim 4, the image processing unit executes the instruction request at the timing when a first I picture or P picture is displayed after the instruction request is made.

According to the video playback apparatus of the present invention (Claim 5), since the image processing unit executes the predetermined kind of instruction request by using decoded data of an I picture or a P picture on which the skip process is not performed, it is possible to perform switching of the playback mode without distortion of the displayed video.

According to the present invention (Claim 6), in the video playback apparatus defined in Claim 5, the image processing unit outputs an error signal indicating that the instruction request cannot be executed, to the outside, when a state where neither an I picture nor a P picture is displayed has continued for a predetermined period of time after the instruction request was made.

According to the video playback apparatus of the present invention (Claim 6), even when video in which B pictures continue in the coded video data stream is inputted, a system controller or the like that controls the entire apparatus can recognize that an error occurs, whereby a countermeasure such as moving to another process or performing error display for the user can be carried out.

According to the present invention (Claim 7), in the video playback apparatus defined in any of Claims 4 to 6, the predetermined kind of instruction request is any of a stop instruction requesting temporary stop of video display, a change instruction requesting change of a zoom target portion, and a zoom cancel instruction requesting cancellation of zoom display.

According to the video playback apparatus of the present invention (Claim 7), even when performing switching to the playback mode indicated by the instruction request, the switching of the playback mode can be carried out without distortion of the displayed video.

According to the present invention (Claim 8), a video playback apparatus comprises a zoom start position acquisition unit for obtaining a zoom start position; a slice header acquisition unit for obtaining a slice header of an inputted coded video data stream; a decoding unit for decoding the inputted coded video data stream to generate a decoded video data stream; a frame buffer in which the decoded video data stream is temporarily stored; an image processing unit for displaying the decoded video data stream that is stored in the frame buffer; and a decoding control unit for, during zoom playback, comparing a position that is indicated by each slice header obtained by the slice header acquisition unit with the zoom start position that is obtained by the zoom start position acquisition unit, and controlling the decoding unit so as to perform a skip process of skipping a decoding start position of the coded video data stream to a position indicated by the slice header corresponding to the zoom start position, only when the inputted coded video data stream is a B picture; wherein, when a stop instruction requesting temporary stop of video display is made during zoom playback, the image processing unit stops the video display at a picture to be a target of the stop instruction, and judges whether the picture as the target of the stop instruction is a B picture or not, and when the picture as the target of the stop instruction is a B picture, the image processing unit does not accept a change instruction requesting change of a zoom target portion or a zoom cancel instruction requesting cancellation of zoom display while the video display video is being stopped at the B picture.

According to the video playback apparatus of the present invention (Claim 8), since the image processing unit performs temporary stop of video display at a picture that is being displayed, regardless of whether the display target picture is a B picture or not, a response to the externally inputted temporary stop instruction can be improved. Further, when the stop picture that is temporarily stopped is a B picture, a zoom cancel instruction or a zoom target portion change instruction is not accepted during the temporary stop, whereby distortion of display video can be avoided even when an instruction such as zoom cancellation is made during the temporary stop.

According to the present invention (Claim 9), a video playback apparatus comprises: a zoom start position acquisition unit for obtaining a zoom start position; a slice header acquisition unit for obtaining a slice header of an inputted coded video data stream; a decoding unit for decoding the inputted coded video data stream to generate a decoded video data stream; a frame buffer in which the decoded video data stream is temporarily stored; an image processing unit for displaying the decoded video data stream that is stored in the frame buffer; and a decoding control unit for, during zoom playback, comparing a position that is indicated by each slice header obtained by the slice header acquisition unit with the zoom start position that is obtained by the zoom start position acquisition unit, and controlling the decoding unit so as to perform a skip process of skipping a decoding start position of the coded video data stream to a position indicated by the slice header corresponding to the zoom start position, only when the inputted coded video data stream is a B picture; wherein, when a change instruction requesting change of a zoom target portion or a zoom cancel instruction requesting cancellation of zoom display is made during zoom playback, the image processing unit judges whether or not the current zoom display is carried out in a playback mode for displaying the same frame continuously at least two times, and executes the change instruction or the zoom cancel instruction when the current zoom display is carried out in the playback mode for displaying the same frame continuously at least two times.

According to the video playback apparatus of the present invention (Claim 9), when video playback in a playback mode such as frame advance playback or slow playback, in which the same frame is displayed continuously at least two times, is carried out during zoom playback, even if the picture to be displayed is a B picture, a zoom cancel instruction, the video playback apparatus accepts a zoom target portion change instruction, or a video display stop instruction. Therefore, distortion of video can be avoided, and a response to an externally inputted instruction request can be improved.

According to the present invention (Claim 10), a video playback apparatus comprises a zoom start position acquisition unit for obtaining a zoom start position; an input bit stream buffer as a storage area in which an inputted coded video data stream is temporarily stored; a slice header acquisition unit for obtaining a slice header of a coded video data stream that is read from the input bit stream buffer; a decoding unit for decoding the coded video data stream that is read from the input bit stream buffer to generate a decoded video data stream; a frame buffer in which the decoded video data stream is temporarily stored; a read pointer holding unit for holding a read pointer of the input bit stream buffer, said read pointer corresponding to a picture header point of currently displayed video; an image processing unit for displaying the decoded video data stream that is stored in the frame buffer; and a decoding control unit for, during zoom playback, comparing a position that is indicated by each slice header obtained by the slice header acquisition unit with the zoom start position that is obtained by the zoom start position acquisition unit, and controlling the decoding unit so as to perform a skip process of skipping a decoding start position of the coded video data stream to a position indicated by the slice header corresponding to the zoom start position, only when the inputted coded video data stream is a B picture; wherein, when a change instruction requesting change of a zoom target portion or a zoom cancel instruction requesting cancellation of zoom display is made during zoom playback, the decoding control unit judges whether a displayed picture is a B picture or not, and when the displayed picture is a B picture, the read pointer of the input bit stream buffer is returned to a read pointer at a picture header point of the currently displayed video, which is held in the read pointer holding unit, and then the coded video data stream starting from the returned read pointer position is read from the input bit stream buffer, and decoded.

According to the video playback apparatus of the present invention (Claim 10), when an instruction request such as a zoom cancel instruction or a zoom target portion change instruction is made during zoom playback, decoding is again carried out from a picture header position of a picture being displayed, which has been decoded in the skip process, whereby a response to the instruction request can be improved, and switching of the display video can be carried out with no distortion of display video.

According to the present invention (Claim 11), in the video playback apparatus defined in Claim 10, the decoding unit stores the decoded video data stream that is obtained when the skip process is performed into the frame buffer as a temporary storage area, from an address position corresponding to the zoom start position, and stores the decoded video data stream from the returned read pointer position into an empty area before the address position corresponding to the zoom start position.

According to the video playback apparatus of the present invention (Claim 11), the decoded data that is obtained by performing redecoding with the read pointer being returned can be stored before the data that has already been decoded in the skip process. Therefore, by performing decoding of only the skipped coded data, switching of the display video can be performed with no distortion of display video.

According to the present invention (Claim 12), a video decoding method comprises a zoom start position acquisition step of obtaining a zoom start position; a slice header acquisition step of obtaining a slice header of an inputted coded video data stream; a comparison step of comparing, during zoom playback, a position that is indicated by each slice header obtained in the slice header acquisition step with a zoom start position that is obtained in the zoom start position acquisition step; and a decoding step of decoding the inputted coded video data stream after performing a skip process for skipping a decoding start position of the coded video data stream to a position indicated by the slice header corresponding to the zoom start position, on the basis of the comparison result obtained in the comparison step.

According to the video decoding method of the present invention (Claim 12), even during zoom playback, decoding of coded data that is required for performing video display can be completed within a period from start of decoding of the coded video data stream to start of display of the decoded video data stream. Thereby, zoom playback having no distortion of video can be realized using a frame buffer of three-plane structure.

According to the present invention (Claim 13), in the video decoding method defined in Claim 12, the comparison step and the skip process in the decoding step are carried out only when the inputted coded video data stream is a B picture.

According to the video decoding method of the present invention (Claim 13), when decoding data based on MPEG, I pictures or P pictures to be used as reference picture data can be prevented from being subjected to the skip process. Further, even during zoom playback, decoding of coded data required for performing video display can be completed within a period from start of decoding of a coded video data stream to start of display of a decoded video data stream, whereby zoom playback having no distortion of video can be realized using a three-plane structure frame buffer.

According to the present invention (Claim 14), the video decoding method defined in Claim 12 further includes a zoom start position calculation step of, when the decoded video data stream is enlarged or reduced for display according to the vertical size of the coded video data stream, recalculating the zoom start position obtained from the zoom start position acquisition step, according to the enlargement scale or the reduction scale for display; and the decoding step determines the decoding start position by using the zoom start position that is recalculated in the zoom start position calculation step.

According to the video decoding method of the present invention (Claim 14), even when the decoded video data stream is enlarged or reduced according to the vertical size of the coded video data stream, the skip process can be carried out using the position indicated by each slice header obtained by the slice header acquisition unit and the zoom start position obtained by the zoom start position acquisition unit, whereby zoom playback having no distortion of video is realized using a frame buffer of three-plane structure.

According to the present invention (Claim 15), a video playback method comprises a zoom start position acquisition step of obtaining a zoom start position; a slice header acquisition step of obtaining a slice header of an inputted coded video data stream; a comparison step of comparing, during zoom playback, a position that is indicated by each slice header obtained in the slice header acquisition step with the zoom start position that is obtained in the zoom start position acquisition step; a decoding step of decoding the inputted coded video data stream to generate a decoded video data stream, and performing a skip process for skipping a decoding start position of the coded video data stream to a position indicated by the slice header corresponding to the zoom start position, on the basis of the comparison result obtained in the comparison step, only when the inputted coded video data stream is a B picture; a storage step of temporarily storing the decoded video data stream obtained in the decoding step into a frame buffer; an image processing step of displaying the decoded video data stream stored in the frame buffer; and a request processing step of, when a predetermined kind of instruction request is made during the zoom playback, judging whether a picture to be displayed at the timing when the instruction request is made is a B picture or not, and nullifying the instruction request when the picture is a B picture.

According to the video playback method of the present invention (Claim 15), since change of the zoom target portion or cancel of zoom display is not executed for the B picture that has been subjected to the skip process, it is possible to prevent distortion of display video when switching the playback mode.

According to the present invention (Claim 16), in the video playback method defined in Claim 15, the request processing step executes the instruction request at a timing when a first I picture or P picture is displayed after the instruction request is made.

According to the video playback method of the present invention (Claim 16), since, in the request processing step, change of the zoom target portion or cancel of zoom display is executed by using decoded data of an I picture or a P picture that is not subjected to the skip process, switching of the playback mode can be carried out with no distortion of display video.

According to the present invention (Claim 17), in the video playback method defined in Claim 16, the request processing step outputs an error signal indicating that the instruction request cannot be executed, to the outside, when a state where neither an I picture nor a P picture is displayed has continued for a predetermined period of time after the instruction request was made.

According to the video playback method of the present invention (Claim 17), even when video in which B pictures continue in the coded video data stream is inputted, a system controller or the like that controls the entire apparatus can recognize that an error occurs, whereby a countermeasure such as moving to another process or performing error display for the user can be carried out.

According to the present invention (Claim 18), in the video playback method defined in any of Claims 15 to 17, the predetermined kind of instruction request is one of a stop instruction requesting temporary stop of video display, a change instruction requesting change of a zoom target portion, and a zoom cancel instruction requesting cancellation of zoom display.

In the video playback method according to the present invention (Claim 18), even when switching the playback mode to the mode indicated by the instruction request, switching of the playback mode can be carried out without distortion of the displayed video.

According to the present invention (Claim 19), a video playback method comprises a zoom start position acquisition step of obtaining a zoom start position; a slice header acquisition step of obtaining a slice header of an inputted coded video data stream; a comparison step of comparing, during zoom playback, a position that is indicated by each slice header obtained in the slice header acquisition step with a zoom start position that is obtained in the zoom start position acquisition step; a decoding step of decoding the inputted coded video data stream to generate a decoded video data stream, and performing a skip process for skipping a decoding start position of the coded video data stream to a position indicated by a slice header corresponding to the zoom start position, on the basis of the comparison result obtained in the comparison step, only when the inputted coded video data stream is a B picture; a storage step of temporarily storing the decoded video data stream obtained in the decoding step into a frame buffer; an image processing step of displaying the decoded video data stream stored in the frame buffer; a stop step of, when a stop instruction requesting temporary stop of video display is made during zoom playback, stopping the video display at a picture to be a target of the stop instruction; a nullification step of judging whether the picture as the target of the stop instruction is a B picture or not, and when the picture as the target of the stop instruction is a B picture, preventing reception of a change instruction requesting change of a zoom target portion or a zoom cancel instruction requesting cancellation of zoom display while the video display is being stopped at the B picture.

According to the video playback method of the present invention (Claim 19), since video display is temporarily stopped at the picture being displayed, regardless of whether the display target picture is a B picture or not, a response to the externally inputted temporary stop instruction can be improved. Further, when the temporarily stopped picture is a B picture, a zoom cancel instruction or a zoom target portion change instruction is not accepted during the temporary stop, whereby distortion of display video can be avoided even when an instruction such as zoom cancellation is made during the temporary stop.

According to the present invention (Claim 20), a video playback method comprises a zoom start position acquisition step of obtaining a zoom start position; a slice header acquisition step of obtaining a slice header of an inputted coded video data stream; a comparison step of comparing, during zoom playback, a position that is indicated by each slice header obtained in the slice header acquisition step with a zoom start position that is obtained in the zoom start position acquisition step; a decoding step of decoding the inputted coded video data stream to generate a decoded video data stream, and performing a skip process for skipping a decoding start position of the coded video data stream to a position indicated by a slice header corresponding to the zoom start position, on the basis of the comparison result obtained in the comparison step, only when the inputted coded video data stream is a B picture; a storage step of temporarily storing the decoded video data stream obtained in the decoding step into a frame buffer; an image processing step of displaying the decoded video data stream stored in the frame buffer; and an execution step of, when a change instruction requesting change of a zoom target portion or a zoom cancel instruction requesting cancellation of zoom display is made during zoom playback, judging whether or not the current zoom display is carried out in a playback mode for displaying the same frame continuously at least two times, and executing the change instruction or the zoom cancel instruction when the current zoom display is carried out in the playback mode for displaying the same frame continuously at least two times.

According to the video playback method of the present invention (Claim 20), when video playback is carried out in a playback mode such as frame advance playback or slow playback for reproducing the same frame continuously at least two times during zoom playback, even if the picture as a display target is a B picture, a zoom cancel instruction, a zoom target portion change instruction, or a video display stop instruction is accepted. Therefore, distortion of video can be avoided, and a response to an externally inputted instruction request can be improved.

According to the present invention (Claim 21), a video playback method comprises a zoom start position acquisition step of obtaining a zoom start position; a temporary storage step of temporarily storing an inputted coded video data stream into an input bit stream buffer; a slice header acquisition step of obtaining a slice header of the coded video data stream that is read from the input bit stream buffer; a comparison step of comparing, during zoom playback, a position that is indicated by each slice header obtained in the slice header acquisition step with a zoom start position that is obtained in the zoom start position acquisition step; a decoding step of decoding the coded video data stream read from the input bit stream buffer to generate a decoded video data stream, and performing a skip process for skipping a decoding start position of the coded video data stream to a position indicated by a slice header corresponding to the zoom start position, on the basis of the comparison result obtained in the comparison step, only when the inputted coded video data stream is a B picture; a storage step of temporarily storing the decoded video data stream obtained in the decoding step into a frame buffer; an image processing step of displaying the decoded video data stream stored in the frame buffer; a read pointer holding step of holding a read pointer of the input bit stream buffer, said read pointer corresponding to a picture header point of currently displayed video; a returning step of, when a change instruction requesting change of a zoom target portion or a zoom cancel instruction requesting cancellation of zoom display is made during zoom playback, judging whether a displayed picture is a B picture or not, and returning the read pointer of the input bit stream buffer back to a read pointer at a picture header point of the currently displayed video, which is held in the read pointer holding step, when the displayed picture is a B picture; and a redecoding step of reading the coded video data stream starting from the returned read pointer position, from the input bit stream buffer, and decoding the same.

According to the video playback method of the present invention (Claim 21), when an instruction request such as a zoom cancel instruction or a zoom target portion change instruction is made during zoom playback, decoding is again carried out from a picture header position of a picture being displayed, which has been decoded in the skip process, whereby a response to the instruction request can be improved, and switching of the display video can be carried out with no distortion of display video.

According to the present invention (Claim 22), in the video playback method defined in Claim 21, in the storage step, the decoded video data stream obtained when the skip process is performed is stored in the frame buffer as a temporary storage area, from an address position corresponding to the zoom start position, and the decoded video data stream starting from the returned read pointer position, which is obtained in the redecoding step, is stored into an empty area before the address position corresponding to the zoom start position.

According to the video playback method of the present invention (Claim 22), the decoded data that is obtained by performing redecoding with the read pointer being returned can be stored before the data that has already been decoded in the skip process. Therefore, by performing decoding of only the skipped coded data, switching of the display video can be performed with no distortion of display video.

### BRIEF DESCRIPTION OF THE DRAWINGS

Figure 1 is a block diagram illustrating an example of a construction of a video playback apparatus according to a first embodiment of the present invention.
Figure 2 is a flowchart for explaining zoom playback performed by the video playback apparatus according to the first embodiment.
Figure 3 is a diagram for explaining the zoom playback performed by the video playback apparatus according to the first embodiment.
Figure 4 is a timing chart for explaining the zoom playback performed by the video playback apparatus according to the first embodiment.
Figure 5 is a diagram for explaining a decoding time performed by a decoding unit of the video playback apparatus according to the first embodiment.
Figure 6 is a diagram for explaining the operation of a zoom start position calculation unit that is added to the video playback apparatus according to the first embodiment.
Figure 7 is a flowchart for explaining the operation of a video playback apparatus according to a second embodiment of the present invention, in a case where a zoom cancel instruction is made during zoom playback.
Figure 8 is a flowchart for explaining the operation of a video playback apparatus according to a third embodiment of the present invention, in a case where a zoom cancel instruction is made during zoom playback.
Figure 9 is a flowchart for explaining the operation of a video playback apparatus according to a fourth embodiment of the present invention, in a case where a zoom cancel instruction is made during zoom playback.
Figure 10 is a flowchart for explaining the operation of a video playback apparatus according to a fifth embodiment of the present invention, in a case where a zoom cancel instruction is made during zoom playback and temporary stop of video display.
Figure 11 is a flowchart for explaining the operation of a video playback apparatus according to a sixth embodiment of the present invention, in a case where a zoom cancel instruction is made during zoom playback.
Figure 12(a) is a diagram for explaining the operation of the video playback apparatus according to the second or third embodiment, in the case where a zoom cancel instruction is made during zoom playback.
Figure 12(b) is a diagram for explaining the operation of the video playback apparatus according to the sixth embodiment, in the case where a zoom cancel instruction is made during zoom playback.
Figure 13 is a block diagram illustrating the construction of a video playback apparatus according to a seventh embodiment of the present invention.
Figure 14 is a diagram illustrating the state of a frame buffer during zoom playback.
Figure 15 is a timing chart for explaining a processing performed by the video playback apparatus according to the seventh embodiment, in a case where a zoom cancel instruction is made during zoom playback and temporary stop of video display.
Figure 16 is a flowchart for explaining the operation of the video playback apparatus according to the seventh embodiment, in a case where a zoom cancel instruction is made during zoom playback and temporary stop of video display.
Figure 17 is a block diagram illustrating an example of a construction of a conventional video playback apparatus for reproducing MPEG video data.
Figure 18 is a diagram for explaining a structure of a frame buffer.
Figure 19 is a diagram for explaining zoom playback.
Figure 20 is a diagram illustrating examples of a decoding timing by a decoding unit and a display timing by an image processing unit.

### BEST MODE TO EXECUTE THE INVENTION

Hereinafter, the embodiments of the present invention will be described with reference to the drawings. In the respective embodiments of the invention, processings of data based on the MPEG standard will be described.

### (Embodiment 1)

A video playback apparatus according to a first embodiment of the present invention performs, during zoom playback, decoding of a coded video data stream from a position that is indicated by a slice header corresponding to a zoom start position.

Hereinafter, a description will be given of a video playback apparatus and a video playback method according to the first embodiment of the present invention, with reference to figures 1 to 5.

Figure 1 is a block diagram illustrating an example of a construction of the video playback apparatus according to the first embodiment.

With reference to figure 1, the video playback apparatus according to the present invention comprises a header detection unit 1, a zoom instruction acquisition unit 2, a decoding unit 3, a decoding control unit 4, a frame buffer 5, and an image processing unit 6, and the respective constituents perform processings as follows.

The header detection unit 1 detects header information of an inputted coded video data stream, and outputs the detected header information to the decoding unit 3 and to the decoding control unit 4.

The zoom instruction acquisition unit 2 obtains a zoom instruction comprising arbitrary start positions x, y where zooming is desired, and an enlargement factor, and outputs the zoom instruction to the image processing unit 6 and, simultaneously, outputs the zoom start position y in the vertical direction to the decoding control unit 4.

The decoding unit 3 decodes the inputted coded video data stream, and stores the decoded video data stream into the frame buffer. The decoding unit 3 comprises a variable-length decoder (VLD), an inverse quantizer (IQ), an inverse discrete cosine transform (IDCT) unit, and a motion compensation (MC) unit.

The decoding control unit 4 control the decoding process of the decoding unit 3 on the basis of the header information supplied from the header detection unit 1. Further, when the decoding control unit 4 receives the zoom instruction outputted from the zoom instruction acquisition unit 2, it compares a position indicated by a slice header included in the header information detected by the header detection unit 101, with the zoom start position included in the zoom instruction obtained from the zoom instruction acquisition unit 2. Then, the decoding control unit 4 controls the decoding unit 3 so that the decoding unit 3 performs a skip process for skipping the decoding start position of the coded video data stream to the position indicated by the slice header corresponding to the zoom start position, on the basis of the result of comparison, only when the inputted coded video data stream is a B picture. It is assumed that the slice header includes information indicating a head portion for decoding in each slice area, when the coded picture is sliced.

The frame buffer 5 is a buffer area wherein the decoded video data stream obtained in the decoding unit 3 is stored, and it is composed of three planes of frame buffers. More specifically, the frame buffer 5 is composed of two frame buffers for reference pictures and one frame buffer for picture display wherein B pictures are stored.

The image processing unit 6 displays the decoded video data stream stored in the frame buffer 5, and when the zoom instruction acquisition unit 2 obtains the zoom instruction, the image processing unit 106 performs zoom playback of the decoded data on the basis of the zoom instruction under control of the decoding control unit 4.

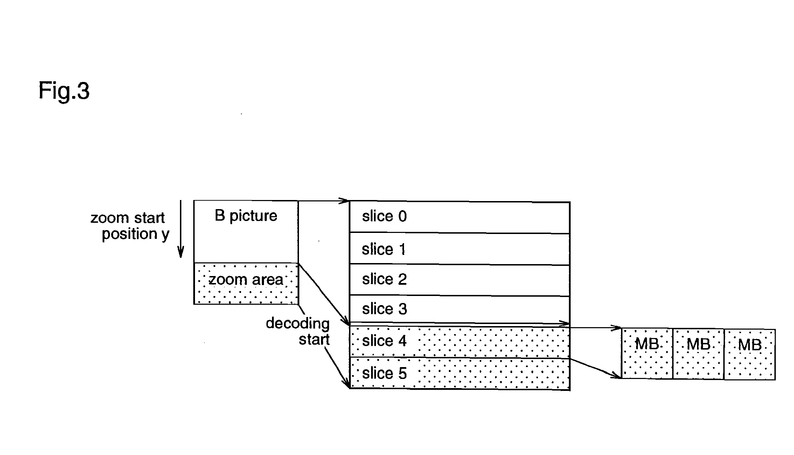

Next, a description will be given of zoom playback that is performed by the video playback apparatus according to the first embodiment, with reference to figures 2 and 3.

Figure 2 is a flowchart for explaining the zoom playback performed by the video playback apparatus according to the first embodiment of the invention, and figure 3 is a diagram for explaining the zoom playback performed by the video playback apparatus according to the first embodiment.

When the zoom instruction acquisition unit 2 obtains a zoom instruction, the zoom instruction is outputted to the image processing unit 6, and simultaneously, the zoom start position y in the vertical direction is outputted to the decoding control unit 4.

At this time, the header detection unit 1 detects a picture header (step S101), and detects a slice header 0 (refer to figure 3) indicating a head position of a picture to be decoded (step S102).

Next, the decoding control unit 4 judges whether the picture type of the picture to be decoded is a B picture or not, on the basis of the detected picture header (step S103). When it is a B picture, the operation goes to step S104. On the other hand, when it is not a B picture, the operation goes to step S106, wherein video decoding of an I picture or P picture which is used as a reference picture is carried out. Since the I picture or the P picture is used as a reference picture, all the coded data constituting this picture are decoded by the decoding unit 3 (step S106).

When the picture type of the picture to be decoded is a B picture, the decoding control unit 4 compares the position that is indicated by the slice header included in the header information detected by the header detector 1, with the zoom start position included in the zoom instruction, and judges whether the zoom start position is larger than the position indicated by the slice header or not (step S104). The zoom start position to be compared with the position indicated by the slice header means a value indicated by y that indicates the zoom start position with respect to the vertical direction of the picture.

Based on the result of judgment, when the zoom start position is larger than the position indicated by the slice header, a next slice header 1 (refer to figure 3) is detected from the header information detected by the header detection unit 1 (step S105), and the position indicated by the slice header is compared with the zoom start position (step S104). This loop processing is repeated until the position indicated by the slice header becomes equal to or larger than the zoom start position.

Thereby, the decoding process for the coded video data stream which is not required for zoom playback can be skipped (hereinafter this process is referred to as a skip process).

Then, as shown in figure 3, when the position of the slice header reaches the zoom start position, the decoding control unit 4 controls the decoding unit 3 to start decoding from macroblock data (refer to figure 3) of the slice header 4 (step S106). At this time, in order to prevent the position indicated by the slice header from exceeding the zoom start position, the decoding process by the decoding unit 3 may be started from the position indicated by the slice header immediately before the corresponding slice header.

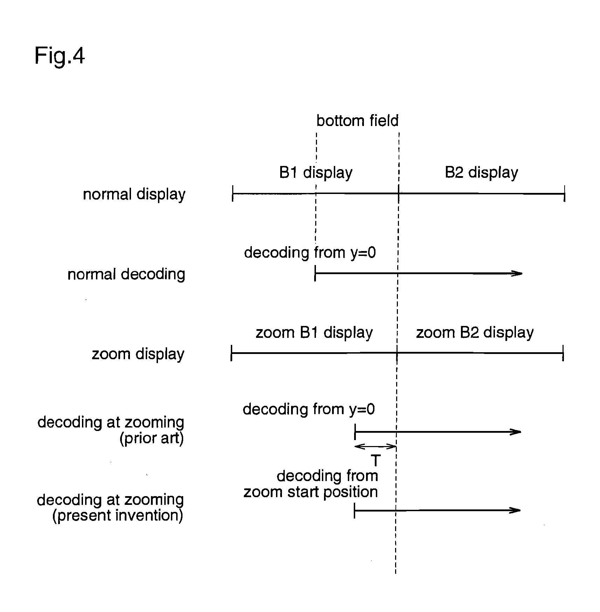

Next, the zoom playback by the video playback apparatus according to the first embodiment will be described in more detail with reference to figure 4.

Figure 4 is a timing chart for explaining the zoom playback performed by the video playback apparatus according to the first embodiment. Figure 4 shows, from top to down, display timing of pictures to be displayed by the video processing unit 6 during normal playback, decoding timing during normal playback by the decoding unit 3, display timing of pictures to be displayed by the image processing unit 6 during zoom playback, decoding timing during conventional zoom playback, and decoding timing during zoom playback of the present invention.

As shown in figure 4, decoding of a B2 picture by the decoding unit 3 is started during bottom field display of a B1 picture that is a previous display picture. This decoded data is written over the storage area of the B1 picture that has already been displayed by the image display unit 6, among the storage areas in the frame buffer 5.

During normal playback having no zoom setting, since display of the B2 picture is started from the y=0 position of the decoded video data stream, the decoding time has no problem.

Next, the zoom playback will be described. During zoom playback, although decoding of the B2 picture is started while the bottom field of the B1 picture is displayed, since zoom playback is carried out, the timing at which the image processing unit 6 obtains the decoded video data stream from the frame buffer 5 is delayed as compared with the case where zoom setting is not performed. The reason is as follows. In order to prevent the decoded data that has not yet been displayed from being overwritten with new data, writing over this decoded data is inhibited until the decoded data is zoom displayed. Therefore, when the zoom processing is carried out in the bottom area of the B1 picture, start of decoding by the decoding unit 3 is undesirably delayed until zoom display of the bottom area is done.

When performing the conventional zoom playback including no skip process of the present invention, the decoding unit 3 must complete the decoding process up to the zoom start position y within the decoding time T. However, since the decoding speed of the decoding unit 3 is equal to that in the normal playback, it is difficult for the decoding unit 3 to complete the decoding process of the data to be displayed within the decoding time T. If the decoding unit 3 cannot complete the decoding process within the decoding time T, the pictures which have not yet been decoded are undesirably displayed, leading to considerable degradation in picture quality. Especially when the zoom start position is in the lower portion of the coded video data stream, i.e., when the value of the zoom start position y is larger, decoding is not completed, and thereby sufficient zoom playback cannot be carried out.

On the other hand, when the zoom playback of the present invention is carried out, although the start of decoding by the decoding unit 3 is delayed as compared with the case where zoom is not set as in the conventional zoom playback, skipping is carried out without decoding the coded video data stream up to the zoom start position y due to zoom setting. Therefore, the decoded data required for performing zoom display of the B2 picture can be obtained immediately. Accordingly, decoding of the coded data required for performing zoom display by the image processing unit 6 can be completed by the time when zoom display of the B2 picture is started.

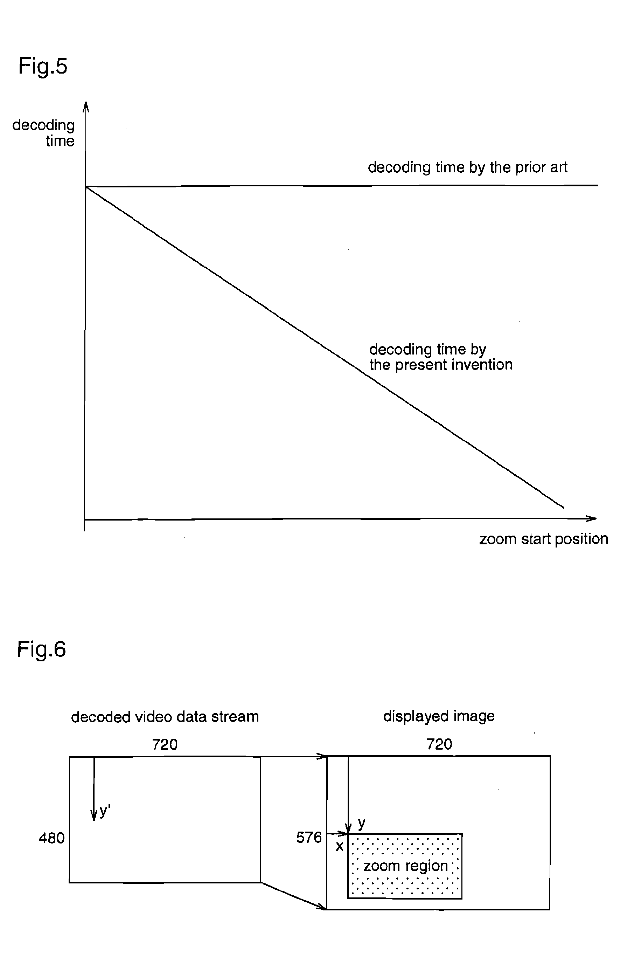

Next, figure 5 is a diagram for explaining the decoding time of the decoding process performed by the decoding unit of the video playback apparatus according to the first embodiment.

In the prior art, the decoding time does not change even when the zoom start position changes. On the other hand, in the present invention, the decoding time is shortened with an increase in the zoom start position, as shown in figure 5.

As described above, according to the video playback apparatus of the first embodiment, since, during the zoom playback, decoding of the coded video data stream is started from the position indicated by the slice header corresponding to the zoom start position, decoding of the coded data required for performing picture display can be completed within a period from the start of decoding by the decoding unit to the start of display by the image processing unit 6, whereby zoom playback with no video distortion can be realized using the three-plane frame buffer 5.

When the decoded video stream is enlarged or reduced according to the vertical size of the coded video stream, a zoom start position calculation unit (not shown) that performs recalculation of the zoom start position obtained by the zoom start position acquisition unit 2 according to the enlargement rate or reduction rate for display is further provided, and the decoding control unit 4 determines the decoding start position using the zoom start position that is recalculated by the zoom start position calculation unit. That is, as shown in figure 6, when the coded video data stream is automatically enlarged according to the video display size, the zoom start position calculation unit performs a calculation of y' = y × 480/576 according to the enlargement rate to derive the zoom start position y'. Thereby, also when the decoded video data stream is enlarged or reduced according to the vertical size of the coded video data stream, the decoding unit 3 can perform the skip process, whereby zoom playback having no video distortion can be realized using the three-plane frame buffer.

### (Embodiment 2)

Next, a video playback apparatus according to a second embodiment of the present invention will be described. Video playback apparatuses according to the second to seventh embodiments of the invention to be described hereinafter are those for performing video display having no distortion by seamlessly switching various playback modes, even when the zoom playback described for the first embodiment is carried out.

In the video playback apparatus according to the first embodiment, when a coded video data stream is decoded to reproduce video by the zoom playback process, the decoding of the coded video data stream is skipped up to the zoom start position y of the B picture that is zoom displayed. Therefore, for example, when the zoom target portion is changed or the zoom display is canceled, decoding of decoded data to be displayed at mode switching has not been done, resulting in distorted video.

So, in the video playback apparatus according to the second embodiment of the present invention, when an instruction to change the zoom target portion or an instruction to cancel the zoom display is made as one of predetermined kinds of instruction requests, the image processing unit 6 executes the instruction request at a timing when the first I picture or P picture is displayed after the instruction request was made.

Hereinafter, the video playback apparatus of the second embodiment will be described in more detail for the case where a zoom cancel instruction requesting cancellation of zoom display is made during zoom playback. The video playback apparatuses to be described as the second to sixth embodiments are different from the video playback apparatus of the first embodiment in the processing contents of the decoding control unit 4 and the image processing unit 6, while the fundamental circuit constructions thereof are identical to that described with reference to figure 1.

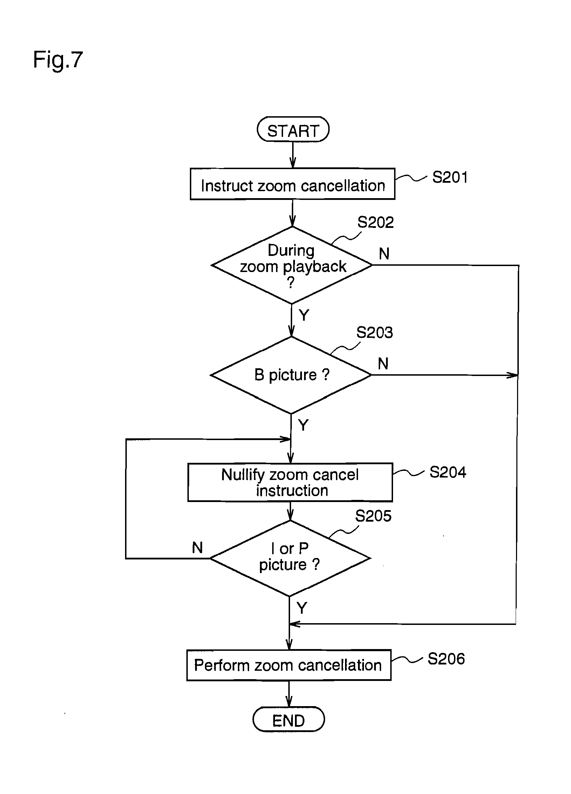

Figure 7 is a flowchart for explaining the operation of the video playback apparatus according to the second embodiment in the case where a zoom cancel instruction is made during zoom playback.

When a zoom cancel instruction requesting cancellation of zoom display, which is outputted by user operation, is received by the video playback apparatus (step S201), initially the image processing unit 6 judges whether zoom playback is currently carried out or not (step S202), and goes to step S203 when zoom playback is currently carried out, while it executes the zoom cancel instruction when zoom playback is not carried out (step S206).

Next, the image processing unit 6 judges whether a picture to be displayed at the timing when the zoom cancel instruction is made is a B picture or not (step S203), and performs a process for nullifying the zoom cancel instruction when the picture to be displayed is a B picture (step S204), and then goes to step S205. On the other hand, when the picture to be displayed is not a B picture but an I picture or a P picture, the image processing unit 6 executes the zoom cancel instruction (step 206). The type of the video picture to be displayed next is judged on the basis of the picture header included in header information detected by the header detection unit 1.

Next, the image processing unit 6 judges whether or not a picture to be displayed next is an I or P picture (step S205).

Based on the result of judgment, when the picture to be displayed next is neither an I picture nor a P picture, the processes in steps S204 and S205 are repeated until the picture to be displayed next becomes an I or P picture. On the other hand, when the picture to be displayed next is an I or P picture, the zoom cancel instruction is executed at the I or P picture to be displayed (step S206).

As described above, in the video playback apparatus according to the second embodiment of the invention, when a predetermined kind of instruction request such as change of the zoom target portion or cancellation of zoom display is made, the image processing unit 6 executes the instruction request at the timing when the first I picture or P picture is displayed after the instruction request was made. Therefore, it is possible to perform change of the zoom target portion or cancellation of zoom display by using the decoded data of the I or P picture which is not skipped by the decoding unit 3, whereby switching of the playback mode can be carried out without distortion of video.

### (Embodiment 3)

Next, a video playback apparatus according to a third embodiment of the present invention will be described.

In the video playback apparatus according to the third embodiment, if a predetermined instruction request such as a zoom cancel instruction cannot be executed within a predetermined period of time in the video playback apparatus according to the second embodiment, the corresponding process is not carried out.

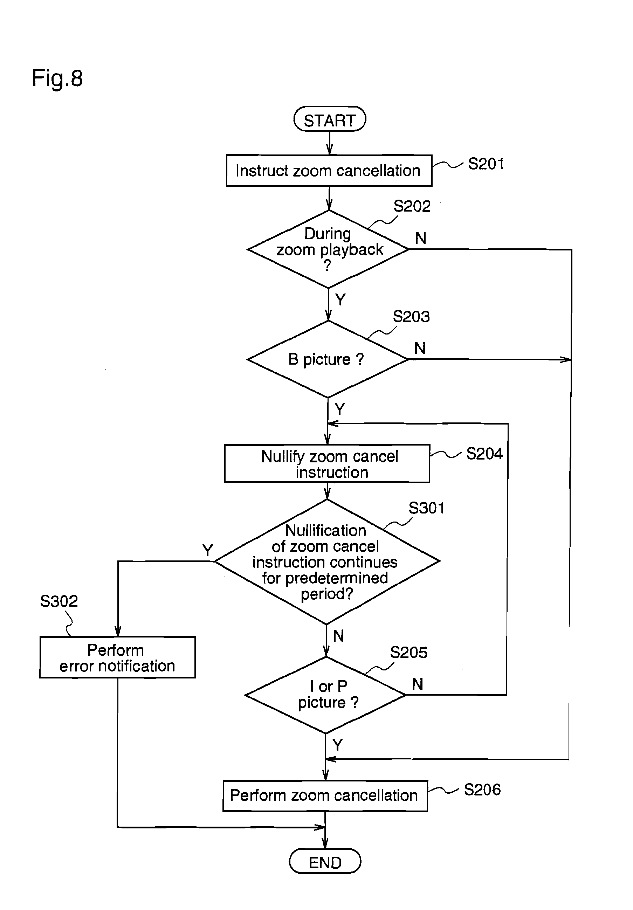

Figure 8 is a flowchart for explaining the operation of the video playback apparatus according to the third embodiment in the case where a zoom cancel instruction is made during zoom playback.

When the video playback apparatus receives a zoom cancel instruction requesting cancellation of zoom display, which is outputted by user operation (step S201), initially the image processing unit 6 judges whether zoom playback is currently carried out or not (step S202), and goes to step S203 when zoom playback is currently carried out, while it executes the zoom cancel instruction when zoom playback is not currently carried out (step S206).

Next, the image processing unit 6 judges whether a picture to be displayed at the timing when the zoom cancel instruction is requested is a B picture or not (step S203), and performs a process of nullifying the zoom cancel instruction when the picture to be displayed is a B picture (step S204), and goes to step S301. On the other hand, when the picture to be displayed is a picture other than a B picture, i.e., an I picture or a P picture, the image processing unit 6 executes the zoom cancel instruction (step S206). The type of the video picture to be displayed next is judged on the basis of the picture header that is included in the header information detected by the header detection unit 1.

In step S301, the image processing unit 6 judges whether or not a predetermined period of time has passed from when it received the zoom cancel instruction (step S301). When it is judged that the predetermined period of time has passed, the image processing unit 6 does not perform zoom cancellation, and outputs an error notification signal indicating that zoom cancellation is nullified to the outside. Thereby, a system controller or the like that controls the entire apparatus recognizes that an error occurs, and performs an appropriate processing such as moving to another step or conducting error display to the user. On the other hand, when the predetermined period of time has not passed yet, the image processing unit 6 goes to step S205.

Next, the image processing unit 6 judges whether or not the picture to be displayed next is an I or P picture (step S205). When it is judged that the picture to be displayed next is neither an I picture nor a picture, the image processing unit 6 returns to step S204 to again perform the processes of step S204 and the subsequent steps. On the other hand, when the picture to be displayed next is an I or P picture, the image processing unit 6 executes the zoom cancel instruction at the I or P picture to be displayed (step S206).

As described above, according to the video playback apparatus of the third embodiment, if the state where neither an I picture nor a P picture is displayed continues for a predetermined period of time or more after a predetermined instruction request such as a zoom cancel instruction was made, an error signal indicating that the instruction request cannot be executed is outputted to the outside. Therefore, even when video having B pictures continuing in the coded video data stream is inputted, the system controller or the like that controls the entire apparatus can recognize that an error occurs, and thereby the system controller or the like can take a processing such as moving to another step or conducting error display to the user.

### (Embodiment 4)

Next, a video playback apparatus according to a fourth embodiment of the present invention will be described.

In the video playback apparatus according to the fourth embodiment of the present invention, when a stop instruction requesting temporary stop of a displayed image is made during zoom playback as a predetermined kind of instruction request, the image processing unit 6 executes the instruction request at a timing when the first I or P picture is displayed after the instruction request was made, like the second embodiment of the present invention. Thereby, even when change of the zoom target portion or cancellation of the zoom display is made during temporary stop of the zoom-played video, switching of the reproduction mode can be carried out with no distortion of display video.

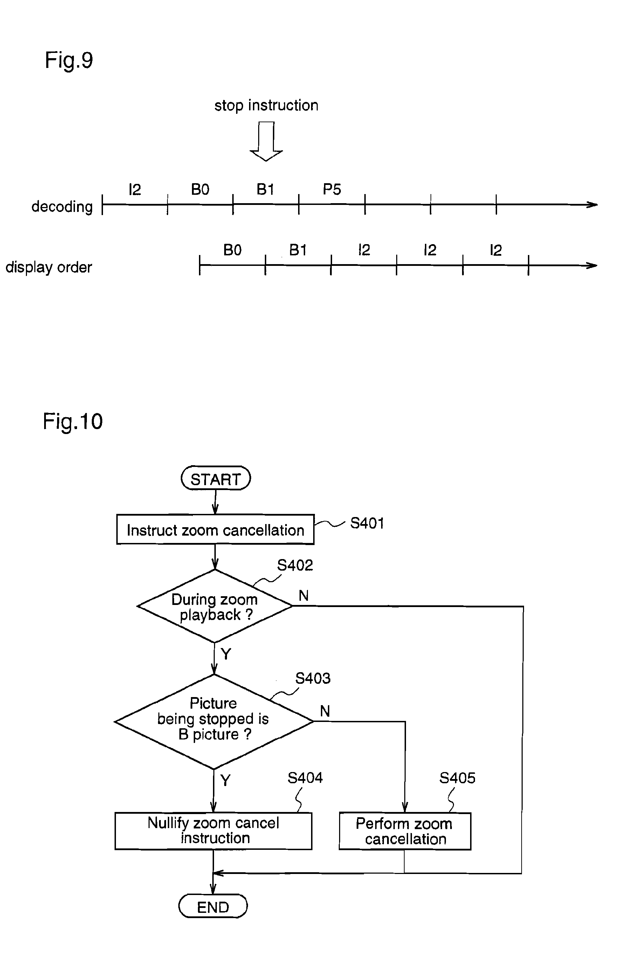

Figure 9 is a diagram for explaining the operation of the video playback apparatus according to the fourth embodiment in the case where a stop instruction is made during zoom playback.

As shown in figure 9, when a stop instruction requesting temporary stop of the displayed image is made when the picture to be displayed next is a picture B1, the stop instruction to the picture B1 is nullified, and the stop instruction is executed at an I picture to be displayed next. Since the specific processing performed by the video playback apparatus is identical to that described for the second embodiment with reference to figure 7, repeated description is not necessary.

As described above, according to the video playback apparatus of the fourth embodiment, when a stop instruction is made as an instruction request, the image processing unit 6 executes the instruction request at the timing when the first I or P picture is displayed after the instruction request was made. Therefore, even when change of the zoom target portion or cancellation of the zoom display is made during temporary stop of the zoom-played video, the zoom target portion can be changed or the zoom display can be cancelled by using the decoded data of the I or P picture that is not skipped by the decoding unit 3, whereby switching of the reproduction mode can be carried out without distortion of video.

While in this fourth embodiment the process described for the second embodiment is executed when a stop instruction requesting temporary stop of the displayed image is made during zoom playback, the error signal notification described for the third embodiment may be further performed.

While in the second to fourth embodiments the instruction to change the zoom target portion, the instruction to cancel the zoom display, and the instruction to temporarily stop the displayed image are described as the predetermined kinds of instruction requests, the present invention is not restricted thereto, and other instructions can be similarly executed.

### (Embodiment 5)

Next, a video playback apparatus according to a fifth embodiment of the present invention will be described.

In the video playback apparatus according to the fifth embodiment, when an instruction to cancel zoom display or an instruction to change a zoom target portion is made during zoom playback as well as temporary stop of the displayed image, if the picture of the stopped image that is displayed is a B picture, the zoom cancel instruction or the zoom target portion change instruction is not accepted, thereby preventing display of data for which decoding has not yet been completed to avoid distortion of the displayed image at switching of the playback mode.

Hereinafter, the video playback apparatus will be described in more detail for the case where a zoom cancel instruction requesting cancellation of zoom display is made during zoom playback and temporary stop of the displayed image.

Figure 10 is a flowchart for explaining the operation of the video playback apparatus according to the fifth embodiment in the case where a zoom cancel instruction is made during zoom playback and temporary stop of the displayed image.

When the video playback apparatus receives a zoom cancel instruction requesting cancellation of zoom display, which is outputted by user operation (step S401), initially the image processing unit 6 judges whether zoom playback is currently carried out or not (step S402), and goes to step S403 when zoom playback is currently carried out, while it terminates the process when zoom playback is not carried out.

Next, the image processing unit 6 judges whether the picture of the stopped video that is displayed is a B picture or not (step S403), and performs a process for nullifying the zoom cancel instruction when the picture of the stopped video is a B picture (step S404). On the other hand, when the picture of the stopped video is a picture other than a B picture, i.e., an I picture or a P picture, the image processing unit 6 executes the zoom cancel instruction (step S405).

As described above, according to the video playback apparatus of the fifth embodiment, the image processing unit 6 performs temporary stop of video display regardless of whether the picture to be displayed is a B picture or not, and when the temporarily stopped image corresponds to a B picture, a zoom cancel instruction or a zoom target portion change instruction is not accepted during the temporary stop. Therefore, a response to the externally inputted temporary stop instruction can be improved, and distortion of display video can be avoided even when an instruction such as zoom cancellation is made during the stop.

### (Embodiment 6)

Next, a video playback apparatus according to a sixth embodiment of the present invention will be described.

In the video playback apparatus according to the sixth embodiment, in the case where video playback in a playback mode such as frame advance playback or slow playback, in which the same frame is displayed continuously at least two times, is carried out during zoom playback, even when a picture to be displayed is a B picture, the video playback apparatus accepts an instruction such as a zoom cancel instruction, a zoom target portion change instruction, or a displayed image stop instruction, thereby improving a response to the externally inputted instruction request.

Hereinafter, the video playback apparatus will be described in more detail for the case where a zoom cancel instruction requesting cancellation of zoom display is made during zoom playback.

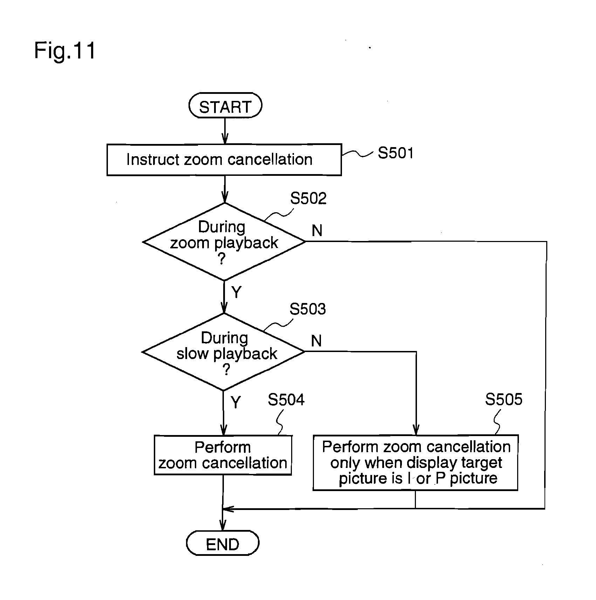

Figure 11 is a flowchart for explaining the operation of the video playback apparatus of the sixth embodiment in the case where a zoom cancel instruction is made during zoom playback.

When the video playback apparatus receives a zoom cancel instruction requesting cancellation of zoom display, which is outputted by user operation (step S501), initially the image processing unit 6 judges whether zoom playback is currently carried out or not (step S502), and goes to step S503 when zoom playback is currently carried out, while it terminates the process when zoom playback is not carried out.

Next, the image processing unit 6 judges whether the current playback mode is a mode for displaying the same frame continuously at least two times, such as frame advance playback or slow playback (step S403), and when it is the playback mode for displaying the same frame continuously at least two times, the image processing unit 6 executes the zoom cancel instruction regardless of whether the picture to be displayed is a B picture or not (step S404). That is, in the case of the playback mode for displaying the same frame continuously at least twice, such as frame advance playback or slow playback, since there is a sufficient time from when decoding of a picture to be displayed next is started to when the picture is displayed, all the data of the displayed image that are required when the playback mode is changed can be decoded, and therefore, there occurs no distortion of the displayed image even when zoom processing is cancelled during the playback mode such as frame advance playback or slow playback.

On the other hand, when the current playback mode is not the playback mode for displaying the same frame continuously at least two times, the processes in steps S203 to S206 that are described with reference to figure 7 are carried out, and zoom cancellation is not performed until the picture to be displayed becomes an I picture or a P picture.

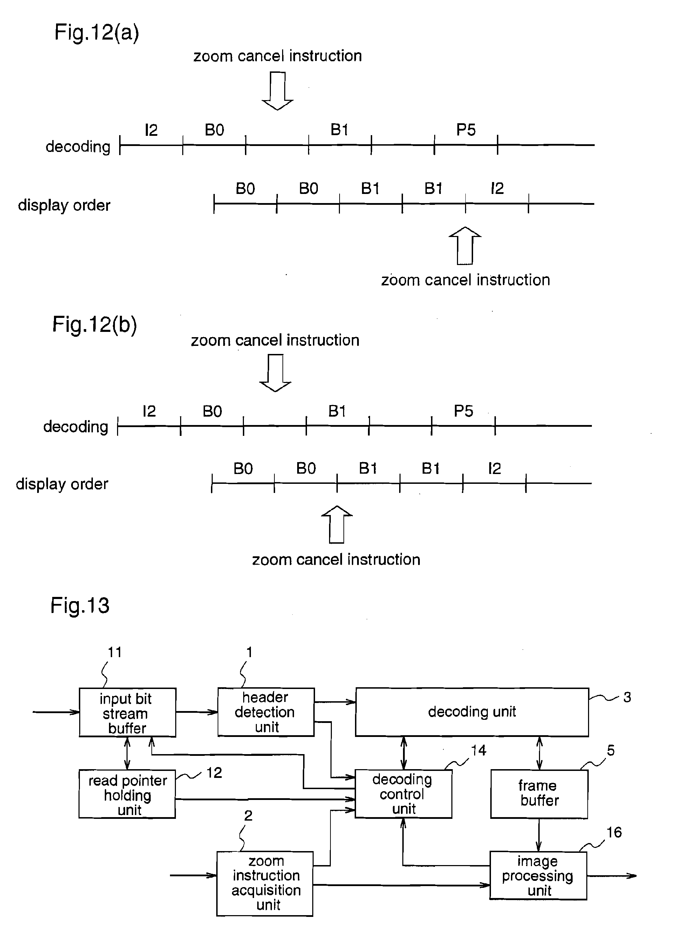

Figure 12 is a diagram for explaining the operation of the video playback apparatus according to the sixth embodiment in the case where a zoom cancel instruction is made during zoom playback.

In the video playback apparatuses according to the second and third embodiments, as shown in figure 12(a), when a zoom cancel instruction or a zoom target portion change instruction such as zoom position change is made from the outside during the playback mode for displaying the same frame continuously at least two times, such as frame advance playback or slow playback, the zoom cancel instruction or the zoom target portion change instruction is enabled when the picture display is changed to the next I picture or P picture. This may cause degradation in a response up to the setting is reflected.

So, in this sixth embodiment, as shown in figure 12(b), for example, when a zoom cancel instruction is made, if the playback mode is a mode for displaying the same frame continuously at least two times, such as frame advance playback or slow playback, the zoom cancel instruction is enabled regardless of the picture type of the image to be displayed next. Thereby, a response to the externally inputted instruction request can be improved.

As described above, according to the video playback apparatus of the sixth embodiment, in the case where video playback in a playback mode such as frame advance playback or slow playback, in which the same frame is displayed continuously at least two times, is carried out during zoom playback, even when the picture to be displayed is a B picture, the video playback apparatus accepts an instruction such as a zoom cancel instruction or a zoom target portion change instruction. Therefore, distortion of video is avoided, and a response to the externally inputted instruction request is improved.

### (Embodiment 7)

Next, a video playback apparatus according to a seventh embodiment of the present invention will be described.

In the video playback apparatus according to the seventh embodiment, when an instruction request such as a zoom cancel instruction or a zoom target portion change instruction is made, decoding is again performed from the picture header position of the picture that has been decoded by the skipping processing, whereby switching of the displayed image is carried out with no distortion of display video.

Figure 13 is a block diagram illustrating the construction of the video playback apparatus according to the seventh embodiment.

With reference to figure 13, the video playback apparatus according to the present invention comprises a header detection unit 1, a zoom instruction acquisition unit 2, a decoding unit 3, a decoding control unit 14, a frame buffer 5, an image processing unit 16, an input bit stream buffer 11, and a read pointer holding unit 12. Since the constituents other than the input bit stream buffer 7 and the read pointer holding unit 8 are identical to those of the video playback apparatus according to the first embodiment, repeated description is not necessary.

The input bit stream buffer 11 is a storage area wherein an inputted coded video data stream is temporarily stored.

The read pointer holding unit 12 holds a read pointer of the input bit stream buffer 11, and specifically, it holds at least a read pointer corresponding to a picture header point of currently displayed video.

The decoding control unit 14 performs the processing in addition to the processing performed by the decoding control unit 4 according to the first embodiment. That is, when a redecoding instruction is made by the image processing unit 16, the decoding control unit 14 returns the read pointer of the input bit stream buffer 11 back to the read pointer at the picture header point of the currently displayed image, which is held by the read pointer holding unit 12, and controls the decoding unit 3 so as to perform redecoding from the returned read pointer position.

The image processing unit 16 performs the following processing in addition to the processing performed by the image processing unit 16 according to the first embodiment. That is, when the image being displayed is zoom-displayed and temporarily stopped, if a change instruction requesting change of the zoom target portion or a zoom cancel instruction requesting cancellation of zoom display is made, the image processing unit 16 outputs a redecoding instruction that instructs redecoding of the currently displayed image, to the decoding control unit 14.

Next, a description will be given of a method for storing a decoded video data stream into the frame buffer 5 in the video playback apparatus according to the seventh embodiment.

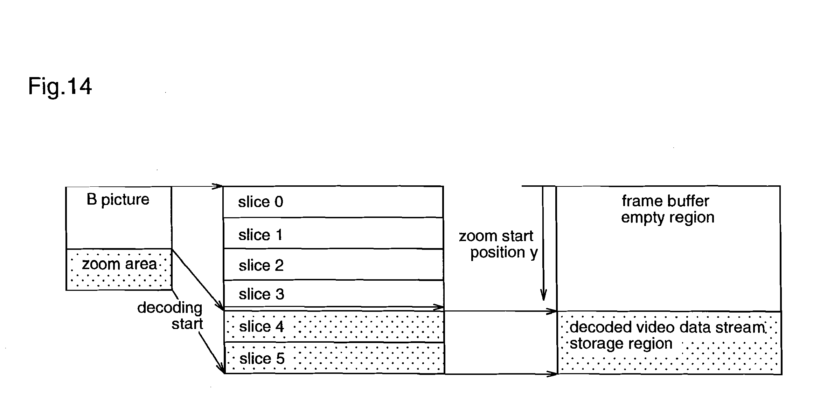

Figure 14 is a diagram illustrating the state of the frame buffer 5 during zoom playback. In figure 14, decoding for the coded video data streams corresponding to the slice headers 0 to 3 are skipped, and only the coded video data streams indicated by the slice headers 4 and 5 are decoded.

In the video playback apparatus according to the seventh embodiment, as shown in figure 14, the decoding unit 3 stores the decoded video data streams which have been subjected to the skip process, from an address position corresponding to the zoom start position in the frame buffer 5 as the temporary storage area. That is, the decoded data are stored in the address positions in the frame buffer 5 corresponding to the decoded slice headers 4 and 5, with the address positions in the frame buffer 5 corresponding to the slice headers 0 to 3 which have been skipped being empty areas.

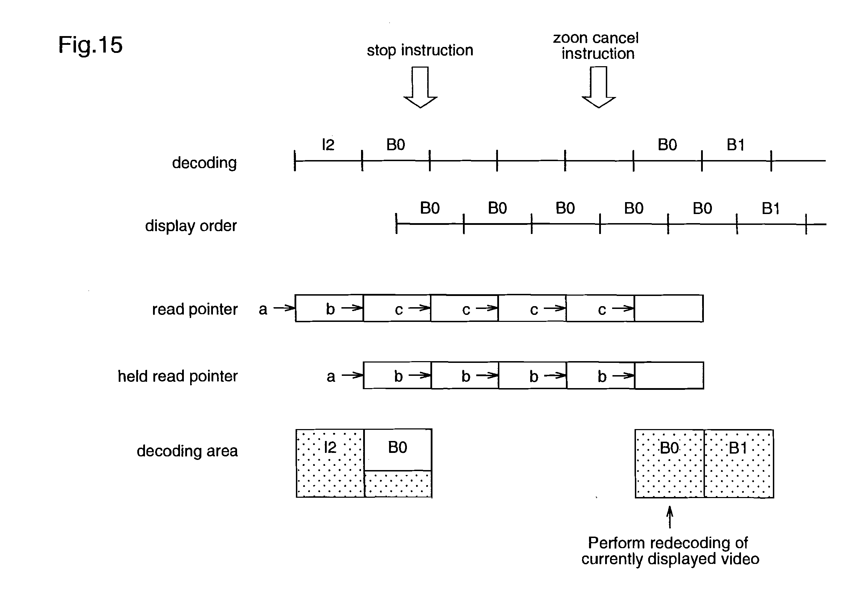

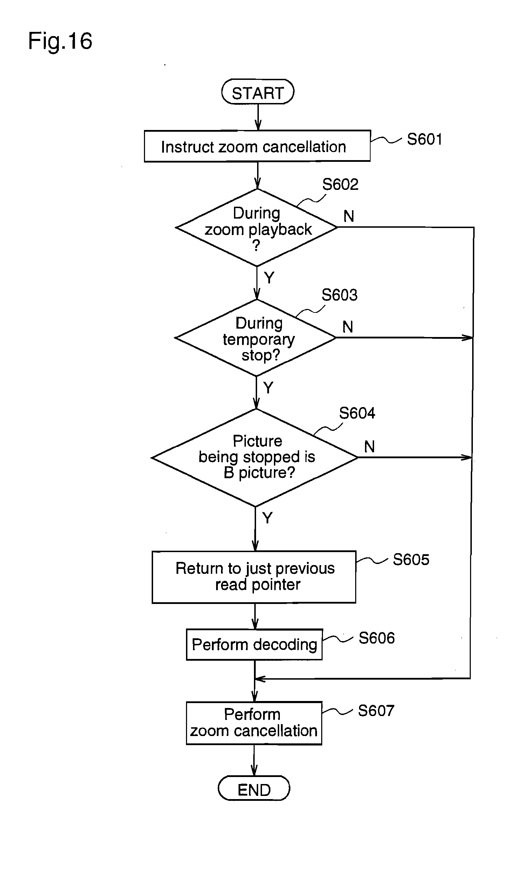

Next, the operation of the video playback apparatus according to the seventh embodiment will be described with reference to figures 15 and 16, for the case where a zoom cancel instruction is made during zoom playback and temporary stop of the displayed video.

Figure 15 is a timing chart for explaining the process to be performed by the video playback apparatus according to the seventh embodiment when a zoom cancel instruction is made during zoom playback and temporary stop of video display.

With reference to figure 15, the decoding control unit 14 controls the decoding unit 3 so as to perform decoding of the B0 picture from the zoom start position y after decoding all the picture data of the 12 picture. The video data stream of the decoded B0 picture is stored from the y position in the frame buffer, which is equal to the zoom start position y as shown in figure 14.

The read pointer holding unit 12 buffers the read pointer of the input bit stream buffer 11 at the point where the picture header of each picture is decoded. In figure 15, "a" denotes a read pointer at the picture header point of the picture I2, "b" denotes a read pointer at the picture header point of the picture B0, and "c" denotes a read pointer of the picture header point of the picture B1.

The image processing unit 16 obtains the decoded video data stream from the y position of the frame buffer to perform display, as shown by the display order in figure 15. Further, when a stop instruction that instructs the image processing unit 16 to stop the displayed video is made, the same B0 picture is repeatedly displayed as the displayed video.

Thereafter, when a zoom setting cancel instruction is externally supplied, the image processing unit 16 outputs a redecoding instruction that instructs redecoding of the currently displayed video to the decoding control unit 14.

On receipt of the decoding instruction from the image processing unit 16, the decoding control unit 14 returns the read pointer c of the input bit stream buffer 11 back to the read pointer b at the picture header point of the currently displayed video, which is held in the read pointer holding unit 12. Since the playback mode at this time is temporarily stopped, the data stored in the input bit stream buffer 11 are not updated, and the coded video data of the temporarily stopped video that is currently displayed is left in the input bit stream buffer 11. Thereby, decoding of the undecoded portion of the picture B0 can be carried out.

Thereafter, the decoding control unit 14 controls the decoding unit 3 so as to perform redecoding from the position b of the returned read pointer. Then, the decoded video data stream decoded by the decoding unit 3 is stored in the empty area of the frame buffer 5. Since the decoded data that is obtained by performing redecoding with the read pointer being returned can be stored before the data that has already been decoded by the skip process, only the skipped coded data can be decoded, whereby switching of the displayed video can be carried out with no distortion of display video.

Figure 16 is a flowchart for explaining the operation of the video playback apparatus according to the seventh embodiment in the case where a zoom cancel instruction is made during zoom playback and temporary stop of video display.

When the video playback apparatus receives a zoom cancel instruction requesting cancellation of zoom display, which is outputted by user operation (step S601), the image processing unit 16 judges whether zoom playback is currently carried out or not (step S602), and goes to step S603 when zoom playback is currently carried out, while it executes the zoom cancel instruction when zoom playback is not currently carried out (step S607).

Next, the image processing unit 16 judges whether the video being displayed is currently stopped or not (step S603). Based on the result of judgment, the image processing unit 16 goes to step S604 when it is currently stopped, or executes the zoom cancel instruction when it is not currently stopped (step S607).

When the video being displayed is during zoom playback and temporary stop, the image processing unit 16 judges whether the picture being stopped is a B picture or not (step S604). When it is judged that the picture being stopped is a B picture, the image processing unit 16 outputs a redecoding instruction to the decoding control unit 14, and goes to step S605. On the other hand, when the picture being stopped is not a B picture but an I or P picture, the image processing unit 16 executes the zoom cancel instruction (step S607).

The decoding control unit 14 that receives the redecoding instruction from the image processing unit 16 returns the read pointer of the input bit stream buffer 11 back to the read pointer at the picture header point of the currently displayed video, which is held in the read pointer holding unit 12 (step S605) as described with reference to figure 15.

Thereafter, the decoding control unit 14 controls the decoding unit 3 so as to perform redecoding from the position of the returned read pointer (step S606), and stores the decoded video data stream in the empty area of the frame buffer 5.

Then, the image processing unit 16 executes the zoom cancel instruction using the decoded video data stream stored in the frame buffer 5 (step S607).

The seventh embodiment of the present invention is described for the case where a zoom cancel instruction is made during temporary stop of video display. However, when the input bit stream buffer 11 holds the already decoded video data stream for a predetermined period of time, the above-mentioned processing can be similarly carried out even if an instruction request such as a zoom cancel instruction or a zoom target portion change instruction is made during zoom playback.

As described above, according to the video playback apparatus of the seventh embodiment, when a change instruction requesting change of the zoom target portion or a zoom cancel instruction requesting cancellation of zoom display is made during zoom playback, the decoding control unit 14 returns the read pointer of the input bit stream buffer 11 back to the read pointer at the picture header point of the currently displayed video, and the decoding unit 14 performs redecoding from the read pointer position. Therefore, a response to the instruction request can be improved, and switching of the displayed video can be carried out with no distortion of display video.

### APPLICABILITY IN INDUSTRY

Since the present invention can reduce a frame buffer in which decoded video data streams are stored, and display video without distortion even when a zoom function is realized, it is very useful as a video decoding apparatus and a video playback apparatus.

## Claims

1. A video decoding apparatus comprising:
a zoom start position acquisition unit for obtaining a zoom start position;
a slice header acquisition unit for obtaining a slice header of an inputted coded video data stream;
a decoding unit for decoding the inputted coded video data stream to generate a decoded video data stream; and
a decoding control unit for, during zoom playback, comparing a position indicated by each slice header that is obtained by the slice header acquisition unit with the zoom start position that is obtained by the zoom start position acquisition unit, and making the decoding unit perform a skip process of skipping a decoding start position of the coded video data stream to a position indicated by the slice header corresponding to the zoom start position.

2. A video decoding apparatus as defined in Claim 1 wherein said decoding control unit controls the decoding unit so as to perform the skip process only when the inputted coded video data stream is a B picture.

3. A video decoding apparatus as defined in Claim 1 further including:
a zoom start position calculation unit for, when the decoded video data stream is enlarged or reduced for display according to the vertical size of the coded video data stream, recalculating the zoom start position obtained from the zoom start position acquisition unit according to the enlargement scale or the reduction scale for display; and
said decoding control unit determining the decoding start position by using the zoom start position that is recalculated by the zoom start position calculation unit.

4. A video playback apparatus comprising:
a zoom start position acquisition unit for obtaining a zoom start position;
a slice header acquisition unit for obtaining a slice header of an inputted coded video data stream;
a decoding unit for decoding the inputted coded video data stream to generate a decoded video data stream;
a frame buffer in which the decoded video data stream is temporarily stored;
an image processing unit for displaying the decoded video data stream that is stored in the frame buffer; and
a decoding control unit for, during zoom playback, comparing a position indicated by each slice header that is obtained by the slice header acquisition unit with the zoom start position that is obtained by the zoom start position acquisition unit, and controlling the decoding unit so as to perform a skip process of skipping a decoding start position of the coded video data stream to a position indicated by the slice header corresponding to the zoom start position, only when the inputted coded video data stream is a B picture;
wherein, when a predetermined kind of instruction request is made during zoom playback, the image processing unit judges whether a picture to be displayed at the timing when the instruction request is made is a B picture or not, and nullifies the instruction request when the picture is a B picture.

5. A video playback apparatus as defined in Claim 4 wherein said image processing unit executes the instruction request at the timing when a first I picture or P picture is displayed after the instruction request is made.

6. A video playback apparatus as defined in Claim 5 wherein said image processing unit outputs an error signal indicating that the instruction request cannot be executed, to the outside, when a state where neither an I picture nor a P picture is displayed has continued for a predetermined period of time after the instruction request was made.

7. A video playback apparatus as defined in any of Claims 4 to 6 wherein said predetermined kind of instruction request is any of a stop instruction requesting temporary stop of video display, a change instruction requesting change of a zoom target portion, and a zoom cancel instruction requesting cancellation of zoom display.

8. A video playback apparatus comprising:
a zoom start position acquisition unit for obtaining a zoom start position;
a slice header acquisition unit for obtaining a slice header of an inputted coded video data stream;
a decoding unit for decoding the inputted coded video data stream to generate a decoded video data stream;
a frame buffer in which the decoded video data stream is temporarily stored;
an image processing unit for displaying the decoded video data stream that is stored in the frame buffer; and
a decoding control unit for, during zoom playback, comparing a position that is indicated by each slice header obtained by the slice header acquisition unit with the zoom start position that is obtained by the zoom start position acquisition unit, and controlling the decoding unit so as to perform a skip process of skipping a decoding start position of the coded video data stream to a position indicated by the slice header corresponding to the zoom start position, only when the inputted coded video data stream is a B picture;
wherein, when a stop instruction requesting temporary stop of video display is made during zoom playback, the image processing unit stops the video display at a picture to be a target of the stop instruction, and judges whether the picture as the target of the stop instruction is a B picture or not, and when the picture as the target of the stop instruction is a B picture, the image processing unit does not accept a change instruction requesting change of a zoom target portion or a zoom cancel instruction requesting cancellation of zoom display while the video display is being stopped at the B picture.

9. A video playback apparatus comprising:
a zoom start position acquisition unit for obtaining a zoom start position;
a slice header acquisition unit for obtaining a slice header of an inputted coded video data stream;
a decoding unit for decoding the inputted coded video data stream to generate a decoded video data stream;
a frame buffer in which the decoded video data stream is temporarily stored;
an image processing unit for displaying the decoded video data stream that is stored in the frame buffer; and
a decoding control unit for, during zoom playback, comparing a position that is indicated by each slice header obtained by the slice header acquisition unit with the zoom start position that is obtained by the zoom start position acquisition unit, and controlling the decoding unit so as to perform a skip process of skipping a decoding start position of the coded video data stream to a position indicated by the slice header corresponding to the zoom start position, only when the inputted coded video data stream is a B picture;
wherein, when a change instruction requesting change of a zoom target portion or a zoom cancel instruction requesting cancellation of zoom display is made during zoom playback, the image processing unit judges whether or not the current zoom display is carried out in a playback mode for displaying the same frame continuously at least two times, and executes the change instruction or the zoom cancel instruction when the current zoom display is carried out in the playback mode for displaying the same frame continuously at least two times.

10. A video playback apparatus comprising:
a zoom start position acquisition unit for obtaining a zoom start position;
an input bit stream buffer as a storage area in which an inputted coded video data stream is temporarily stored;
a slice header acquisition unit for obtaining a slice header of a coded video data stream that is read from the input bit stream buffer;
a decoding unit for decoding the coded video data stream that is read from the input bit stream buffer to generate a decoded video data stream;
a frame buffer in which the decoded video data stream is temporarily stored;
a read pointer holding unit for holding a read pointer of the input bit stream buffer, said read pointer corresponding to a picture header point of currently displayed video;
an image processing unit for displaying the decoded video data stream that is stored in the frame buffer; and
a decoding control unit for, during zoom playback, comparing a position that is indicated by each slice header obtained by the slice header acquisition unit with the zoom start position that is obtained by the zoom start position acquisition unit, and controlling the decoding unit so as to perform a skip process of skipping a decoding start position of the coded video data stream to a position indicated by the slice header corresponding to the zoom start position, only when the inputted coded video data stream is a B picture;
wherein, when a change instruction requesting change of a zoom target portion or a zoom cancel instruction requesting cancellation of zoom display is made during zoom playback, the decoding control unit judges whether a displayed picture is a B picture or not, and when the displayed picture is a B picture, the read pointer of the input bit stream buffer is returned to a read pointer at a picture header point of the currently displayed video, which is held in the read pointer holding unit, and then the coded video data stream starting from the returned read pointer position is read from the input bit stream buffer, and decoded.

11. A video playback apparatus as defined in Claim 10 wherein said decoding unit stores the decoded video data stream that is obtained when the skip process is performed into the frame buffer as a temporary storage area, from an address position corresponding to the zoom start position, and stores the decoded video data stream from the returned read pointer position into an empty area before the address position corresponding to the zoom start position.

12. A video decoding method comprising:
a zoom start position acquisition step of obtaining a zoom start position;
a slice header acquisition step of obtaining a slice header of an inputted coded video data stream;
a comparison step of comparing, during zoom playback, a position that is indicated by each slice header obtained in the slice header acquisition step with a zoom start position that is obtained in the zoom start position acquisition step; and
a decoding step of decoding the inputted coded video data stream after performing a skip process for skipping a decoding start position of the coded video data stream to a position indicated by the slice header corresponding to the zoom start position, on the basis of the comparison result obtained in the comparison step.

13. A video decoding method as defined in Claim 12 wherein said comparison step and said skip process in the decoding step are carried out only when the inputted coded video data stream is a B picture.

14. A video decoding method as defined in Claim 12 further including:
a zoom start position calculation step of, when the decoded video data stream is enlarged or reduced for display according to the vertical size of the coded video data stream, recalculating the zoom start position obtained from the zoom start position acquisition step, according to the enlargement scale or the reduction scale for display; and
said decoding step determining the decoding start position by using the zoom start position that is recalculated in the zoom start position calculation step.

15. A video playback method comprising:
a zoom start position acquisition step of obtaining a zoom start position;
a slice header acquisition step of obtaining a slice header of an inputted coded video data stream;
a comparison step of comparing, during zoom playback, a position that is indicated by each slice header obtained in the slice header acquisition step with the zoom start position that is obtained in the zoom start position acquisition step;
a decoding step of decoding the inputted coded video data stream to generate a decoded video data stream, and performing a skip process for skipping a decoding start position of the coded video data stream to a position indicated by the slice header corresponding to the zoom start position, on the basis of the comparison result obtained in the comparison step, only when the inputted coded video data stream is a B picture;
a storage step of temporarily storing the decoded video data stream obtained in the decoding step into a frame buffer;
an image processing step of displaying the decoded video data stream stored in the frame buffer; and
a request processing step of, when a predetermined kind of instruction request is made during the zoom playback, judging whether a picture to be displayed at the timing when the instruction request is made is a B picture or not, and nullifying the instruction request when the picture is a B picture.

16. A video playback method as defined in Claim 15 wherein said request processing step executes the instruction request at the timing when a first I picture or P picture is displayed after the instruction request is made.

17. A video playback method as defined in Claim 16 wherein said request processing step outputs an error signal indicating that the instruction request cannot be executed, to the outside, when a state where neither an I picture nor a P picture is displayed has continued for a predetermined period of time after the instruction request was made.

18. A video playback method as defined in any of Claims 15 to 17 wherein said predetermined kind of instruction request is any of a stop instruction requesting temporary stop of video display, a change instruction requesting change of a zoom target portion, and a zoom cancel instruction requesting cancellation of zoom display.

19. A video playback method comprising:
a zoom start position acquisition step of obtaining a zoom start position;
a slice header acquisition step of obtaining a slice header of an inputted coded video data stream;
a comparison step of comparing, during zoom playback, a position that is indicated by each slice header obtained in the slice header acquisition step with a zoom start position that is obtained in the zoom start position acquisition step;
a decoding step of decoding the inputted coded video data stream to generate a decoded video data stream, and performing a skip process for skipping a decoding start position of the coded video data stream to a position indicated by the slice header corresponding to the zoom start position, on the basis of the comparison result obtained in the comparison step, only when the inputted coded video data stream is a B picture;
a storage step of temporarily storing the decoded video data stream obtained in the decoding step into a frame buffer;
an image processing step of displaying the decoded video data stream stored in the frame buffer;
a stop step of, when a stop instruction requesting temporary stop of video display is made during zoom playback, stopping the video display at a picture to be a target of the stop instruction;
a nullification step of judging whether the picture as the target of the stop instruction is a B picture or not, and when the picture as the target of the stop instruction is a B picture, preventing reception of a change instruction requesting change of a zoom target portion or a zoom cancel instruction requesting cancellation of zoom display while the video display is being stopped at the B picture.

20. A video playback method comprising:
a zoom start position acquisition step of obtaining a zoom start position;
a slice header acquisition step of obtaining a slice header of an inputted coded video data stream;
a comparison step of comparing, during zoom playback, a position that is indicated by each slice header obtained in the slice header acquisition step with a zoom start position that is obtained in the zoom start position acquisition step;
a decoding step of decoding the inputted coded video data stream to generate a decoded video data stream, and performing a skip process for skipping a decoding start position of the coded video data stream to a position indicated by a slice header corresponding to the zoom start position, on the basis of the comparison result obtained in the comparison step, only when the inputted coded video data stream is a B picture;
a storage step of temporarily storing the decoded video data stream obtained in the decoding step into a frame buffer;
an image processing step of displaying the decoded video data stream stored in the frame buffer; and
an execution step of, when a change instruction requesting change of a zoom target portion or a zoom cancel instruction requesting cancellation of zoom display is made during zoom playback, judging whether or not the current zoom display is carried out in a playback mode for displaying the same frame continuously at least two times, and executing the change instruction or the zoom cancel instruction when the current zoom display is carried out in the playback mode for displaying the same frame continuously at least two times.

21. A video playback method comprising:
a zoom start position acquisition step of obtaining a zoom start position;
a temporary storage step of temporarily storing an inputted coded video data stream into an input bit stream buffer;
a slice header acquisition step of obtaining a slice header of the coded video data stream that is read from the input bit stream buffer;
a comparison step of comparing, during zoom playback, a position that is indicated by each slice header obtained in the slice header acquisition step with a zoom start position that is obtained in the zoom start position acquisition step;
a decoding step of decoding the coded video data stream read from the input bit stream buffer to generate a decoded video data stream, and performing a skip process for skipping a decoding start position of the coded video data stream to a position indicated by a slice header corresponding to the zoom start position, on the basis of the comparison result obtained in the comparison step, only when the inputted coded video data stream is a B picture;
a storage step of temporarily storing the decoded video data stream obtained in the decoding step into a frame buffer;
an image processing step of displaying the decoded video data stream stored in the frame buffer;
a read pointer holding step of holding a read pointer of the input bit stream buffer, said read pointer corresponding to a picture header point of currently displayed video;
a returning step of, when a change instruction requesting change of a zoom target portion or a zoom cancel instruction requesting cancellation of zoom display is made during zoom playback, judging whether a displayed picture is a B picture or not, and returning the read pointer of the input bit stream buffer back to a read pointer at a picture header point of the currently displayed video, which is held in the read pointer holding step, when the displayed picture is a B picture; and
a redecoding step of reading the coded video data stream starting from the returned read pointer position, from the input bit stream buffer, and decoding the same.

22. A video playback method as defined in Claim 21 wherein, in said storage step, the decoded video data stream obtained when the skip process is performed is stored in the frame buffer as a temporary storage area, from an address position corresponding to the zoom start position, and the decoded video data stream starting from the returned read pointer position, which is obtained in the redecoding step, is stored into an empty area before the address position corresponding to the zoom start position.
